(19) Europäisches Patentamt
European Patent Office
Office européen des brevets

(11) **EP 4 512 551 A1**

(12) **EUROPEAN PATENT APPLICATION**

(43) Date of publication:
**26.02.2025 Bulletin 2025/09**

(21) Application number: **24194762.1**

(22) Date of filing: **15.08.2024**

(51) International Patent Classification (IPC):
**B22F 10/366** (2021.01)     **B22F 10/28** (2021.01)
**B22F 10/38** (2021.01)     **B33Y 10/00** (2015.01)
**B33Y 50/02** (2015.01)

(52) Cooperative Patent Classification (CPC):
**B22F 10/366; B22F 10/28; B22F 10/38;
B33Y 10/00; B33Y 50/02**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **25.08.2023 JP 2023137393**

(71) Applicant: **Jeol Ltd.
Akishima-shi, Tokyo 196-8558 (JP)**

(72) Inventors:
• **HISAKI, Taku
  Tokyo, 196-8558 (JP)**
• **SATO, Takashi
  Tokyo, 196-8558 (JP)**
• **KOIWA, Kozo
  Tokyo, 196-8558 (JP)**

(74) Representative: **Boult Wade Tennant LLP
Salisbury Square House
8 Salisbury Square
London EC4Y 8AP (GB)**

(54) **BUILD DATA GENERATING DEVICE, THREE-DIMENSIONAL POWDER BED FUSION ADDITIVEMANUFACTURING SYSTEM, AND THREE-DIMENSIONAL POWDER BED FUSION ADDITIVE MANUFACTURING METHOD**

(57)     Provided is a technique capable of reducing variation in density of scanning lines (61 to 66) when generating the scanning lines (61 to 66) for manufacturing an article (38) by three-dimensional powder bed fusion additive manufacturing. A build data generating device (30) generates build data for controlling the three-dimensional powder bed fusion additive manufacturing apparatus (10) that melts the cross-sectional shape (40) of each layer by irradiation of a beam to manufacture the article (38). The build data generating device (30) includes a build data generating unit (303) that generates a plurality of scanning lines (61 to 66) in a region of the cross-sectional shape (40) cut out from three-dimensional shape data of the article (38) by a predetermined beam scanning method, and generates correction scanning lines (71 to 79) in a portion where the arrangement of the scanning lines becomes sparse and/or a portion where the arrangement of the scanning lines becomes dense.

FIG. 20

EP 4 512 551 A1

## Description

BACKGROUND

Technical Field

The present invention relates to a build data generating device, a three-dimensional powder bed fusion additive manufacturing (PBF-AM) system, and a three-dimensional PBF-AM method.

As one of additive manufacturing methods for manufacturing an article, a powder bed fusion method is known. The powder bed fusion method is a shaping method in which a surface (hereinafter, also referred to as a "manufactured surface") of a powder layer formed by spreading powder with a predetermined thickness is selectively irradiated with a beam to melt and solidify a portion having a cross-sectional shape of an article to be manufactured. In the powder bed fusion method, a build plate is sequentially lowered each time the powder of each layer is melted and solidified, and the powder layers are stacked one by one to manufacture an article (component or the like). A three-dimensional PBF-AM apparatus employing a powder bed fusion method is disclosed in, for example,

Patent Literature 1.

The operation of the three-dimensional PBF-AM apparatus is controlled according to an operation sequence program (hereinafter, also referred to as "build data") prepared in advance based on three-dimensional shape data. The three-dimensional shape data is data for specifying a three-dimensional shape of an article generated by three-dimensional CAD (Computer-Aided Design) or the like. The build data is generated by a computer device (hereinafter, referred to as a "build data generating device") in which a program generally called CAM (Computer Aided Manufacturing) software is incorporated using three-dimensional shape data of an article to be manufactured. The CAM software is executable on any computer.

As the processing of the CAM software in the build data generating device, first, the cross-sectional shape of each layer is cut out at an interval of a thickness corresponding to one layer from the input three-dimensional shape data. Next, build data for melting the cross-sectional shape of each layer is determined. The build data includes data of a scanning line for melting a portion having a cross-sectional shape of each layer by beam scanning.

Citation List

Patent Literature

Patent Literature 1: JP 2019-7065 A

SUMMARY

However, in the build data generating device in the related art, when the plurality of scanning lines is generated in the region of the cross-sectional shape of each layer by a predetermined beam scanning method, a portion where the scanning lines are too far apart or a portion where the scanning lines are too close may occur. Therefore, when the three-dimensional PBF-AM apparatus is operated based on the build data generated by the build data generating device, a melting defect due to insufficient melting is likely to occur at the portion where the scanning lines are too far apart, and a melting defect due to excessive melting is likely to occur at the portion where the scanning lines are too close.

The present invention has been made to solve the above problems, and an object of the present invention is to provide a technique capable of reducing variation in density of scanning lines when generating the scanning lines for manufacturing an article by three-dimensional powder bed fusion additive manufacturing.

A build data generating device according to the present invention is a build data generating device generating build data for controlling a three-dimensional PBF-AM apparatus that manufactures an article by melting a cross-sectional shape of each layer by irradiation of a beam, and includes a build data generating unit that generates a plurality of scanning lines in a region of a cross-sectional shape cut out from three-dimensional shape data of the article by a predetermined beam scanning method, and generates correction scanning lines in a portion where arrangement of the scanning lines becomes sparse and/or a portion where arrangement of the scanning lines becomes dense.

A three-dimensional PBF-AM system according to the present invention is a three-dimensional PBF-AM system including: a three-dimensional PBF-AM apparatus that manufactures an article by melting a cross-sectional shape of each layer by irradiation of a beam; and a build data generating device that generates build data for controlling the three-dimensional PBF-AM apparatus, in which the build data generating device includes a build data generating unit that generates a plurality of scanning lines in a region of a cross-sectional shape cut out from three-dimensional shape data of the article by a predetermined beam scanning method, and generates a correction scanning line in a portion where arrangement of the scanning lines becomes sparse and/or a portion where arrangement of the scanning lines becomes dense, and the three-dimensional PBF-AM apparatus manufactures the article by performing scanning with the beam along the plurality of scanning lines and the correction scanning lines.

A three-dimensional PBF-AM method according to the present invention is a three-dimensional PBF-AM method for melting a cross-sectional shape of each layer by irradiation of a beam to manufacture an article, the method including: generating a plurality of scanning lines in a region of a cross-sectional shape cut out from three-dimensional shape data of the article by a predetermined beam scanning method; generating correction scanning lines in a portion where arrangement of the scanning lines becomes sparse and/or a portion where arrangement of the scanning lines becomes dense; and manufacturing the article by performing scanning with the beam along the plurality of scanning lines and the correction scanning lines.

According to the present invention, it is possible to reduce variation in density of scanning lines when generating the scanning lines for manufacturing an article by three-dimensional powder bed fusion additive manufacturing.

BRIEF DESCRIPTION OF DRAWINGS

FIG. 1 is a side view schematically illustrating a configuration of a three-dimensional PBF-AM apparatus according to a first embodiment of the present invention;

FIG. 2 is a block diagram illustrating a configuration example of a control system of the three-dimensional PBF-AM apparatus according to the first embodiment of the present invention;

FIG. 3 is a flowchart illustrating a procedure of a processing operation of the three-dimensional PBF-AM apparatus according to the first embodiment of the present invention;

FIG. 4 is a diagram illustrating a configuration example of a three-dimensional PBF-AM system according to the first embodiment of the present invention;

FIG. 5 is a block diagram illustrating a configuration example of a build data generating device according to the first embodiment of the present invention;

FIG. 6 is a flowchart illustrating an example of a processing procedure of the build data generating device according to the first embodiment of the present invention;

FIG. 7 is a diagram (part 1) illustrating the contents of a process performed by a build data generating unit of the build data generating device according to the first embodiment of the present invention;

FIG. 8 is a diagram (part 2) illustrating the contents of the process performed by the build data generating unit of the build data generating device according to the first embodiment of the present invention;

FIG. 9 is a diagram (part 3) illustrating the contents of the process performed by the build data generating unit of the build data generating device according to the first embodiment of the present invention;

FIG. 10 is a diagram (part 4) illustrating the contents of the process performed by the build data generating unit of the build data generating device according to the first embodiment of the present invention;

FIG. 11 is a diagram (part 5) illustrating the contents of the process performed by the build data generating unit of the build data generating device according to the first embodiment of the present invention;

FIG. 12 is a diagram (part 6) illustrating the contents of the process performed by the build data generating unit of the build data generating device according to the first embodiment of the present invention;

FIG. 13 is a diagram (part 7) illustrating the contents of the process performed by the build data generating unit of the build data generating device according to the first embodiment of the present invention;

FIG. 14 is a diagram (part 8) illustrating the contents of the process performed by the build data generating unit of the build data generating device according to the first embodiment of the present invention;

FIG. 15 is a diagram (part 9) illustrating the contents of the process performed by the build data generating unit of the build data generating device according to the first embodiment of the present invention;

FIG. 16 is a diagram (part 10) illustrating the contents of the process performed by the build data generating unit of the build data generating device according to the first embodiment of the present invention;

FIG. 17 is a diagram (part 11) illustrating the contents of the process performed by the build data generating unit of the build data generating device according to the first embodiment of the present invention;

FIG. 18 is a diagram (part 12) illustrating the contents of the process performed by the build data generating unit of the build data generating device according to the first embodiment of the present invention;

FIG. 19 is a diagram (part 13) illustrating the contents of the process performed by the build data generating unit of the build data generating device according to the first embodiment of the present invention;

FIG. 20 is a diagram (part 14) illustrating the contents of the process performed by the build data generating unit of the build data generating device according to the first embodiment of the present invention;

FIG. 21 is a diagram (part 1) illustrating the contents of a process performed by a build data generating unit of a build data generating device according to a second embodiment of the present invention;

FIG. 22 is a diagram (part 2) illustrating the contents of the process performed by the build data generating unit of the build data generating device according to the second embodiment of the present invention;

FIG. 23 is a diagram (part 3) illustrating the contents of the process performed by the build data generating unit of the build data generating device according to the second embodiment of the present invention;

FIG. 24 is a diagram (part 4) illustrating the contents of the process performed by the build data generating unit of the build data generating device according to the second embodiment of the present invention;

FIG. 25 is a diagram (part 5) illustrating the contents of the process performed by the build data generating unit of the build data generating device according to the second embodiment of the present invention;
FIG. 26 is a diagram (part 6) illustrating the contents of the process performed by the build data generating unit of the build data generating device according to the second embodiment of the present invention;
FIG. 27 is a diagram (part 7) illustrating the contents of the process performed by the build data generating unit of the build data generating device according to the second embodiment of the present invention; and
FIG. 28 is a diagram (part 8) illustrating the contents of the process performed by the build data generating unit of the build data generating device according to the second embodiment of the present invention.

DETAILED DESCRIPTION

Hereinafter, embodiments of the present invention will be described in detail with reference to the drawings. In the present specification and the drawings, elements having substantially the same function or configuration are denoted by the same reference numerals, and redundant description is omitted. Further, the following description and drawings are examples for describing the present invention, and may be omitted and simplified for convenience of description. Each component may be singular or plural unless otherwise specified. In addition, the position, size, shape, range, and the like of each component illustrated in the drawings may not represent the actual position, size, shape, range, and the like in order to facilitate understanding of the invention. Therefore, the present invention is not necessarily limited to the position, size, shape, range, and the like disclosed in the drawings.

<First Embodiment>

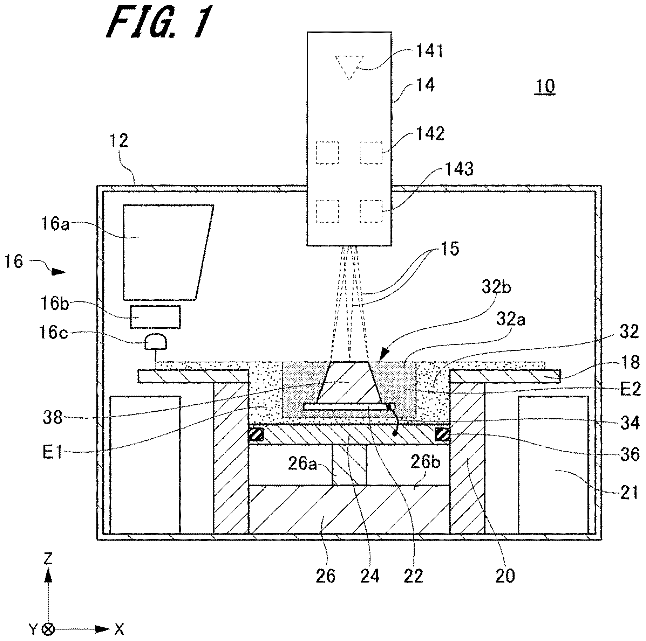

FIG. 1 is a side view schematically illustrating a configuration of a three-dimensional PBF-AM apparatus according to a first embodiment of the present invention; In the following description, in order to clarify the shape, positional relationship, and the like of each part of the three-dimensional PBF-AM apparatus, the left-right direction in FIG. 1 is referred to as an X direction, the depth direction in FIG. 1 is referred to as a Y direction, and the vertical direction in FIG. 1 is referred to as a Z direction. The X direction, the Y direction, and the Z direction are directions orthogonal to each other. Further, the X direction and the Y direction are parallel to the horizontal direction, and the Z direction is parallel to the perpendicular direction.

As illustrated in FIG. 1, a three-dimensional PBF-AM apparatus 10 includes a vacuum chamber 12, a beam irradiation device 14, a powder applying device 16, a build table 18, a build box 20, a collection box 21, a build plate 22, an inner base 24, and a plate moving device 26. The three-dimensional PBF-AM apparatus 10 manufactures an article (hereinafter, also referred to as a "manufactured object") by the above-described powder bed fusion method. In the present embodiment, a case where the beam with which the surface of a powder layer is irradiated is a charged particle beam, more specifically, an electron beam will be described as an example. However, the beam is not limited to the charged particle beam, and may be, for example, a laser beam. When a laser beam is employed, it is not necessary to vacuum the chamber.

The vacuum chamber 12 is a chamber for creating a vacuum state by evacuating the air in the chamber by a vacuum pump (not illustrated). The vacuum chamber 12 corresponds to a build chamber that forms a space for manufacturing a three-dimensional manufactured object 38. The build chamber forms a space for manufacturing a three-dimensional manufactured object.

The beam irradiation device 14 is a device that irradiates the surface of a powder layer 32a, that is, a manufactured surface 32b with an electron beam 15. The electron beam 15 is an example of the charged particle beam. The beam irradiation device 14 includes an electron gun 141 that is a generation source of the electron beam 15, a converging lens 142 that converges the electron beam 15 generated by the electron gun 141, and a deflection device 143 that deflects the electron beam 15.

The converging lens 142 is configured using a converging coil, and converges the electron beam 15 by a magnetic field generated by the converging coil. The size of the electron beam 15 in the manufactured surface 32b can be adjusted by the converging lens 142. The deflection device 143 is configured using a deflection coil, and deflects the electron beam 15 by a magnetic field generated by the deflection coil. The scanning of the electron beam 15 on the manufactured surface 32b is achieved by the deflection device 143.

The powder application device 16 is a device that applies a metal powder 32, which is a raw material of the manufactured object 38, onto the build plate 22 to form the powder layer 32a. The metal powder 32 is an example of a powder to be the raw material of the manufactured object 38. The powder application device 16 includes a hopper 16a, a powder dropping device 16b, and a squeegee 16c. The hopper 16a is a chamber for storing powder. The powder dropping device 16b is a device that drops the powder stored in the hopper 16a onto the build table 18. The squeegee 16c is an elongated member elongated in the Y direction. The squeegee 16c horizontally moves on the build plate 22 from one end side toward the other end side of the build table 18 to spread the metal powder 32. Thus, the powder layer 32a is formed on the build plate 22. The squeegee 16c is provided to be movable in the X direction in order to spread the metal powder 32 over the entire surface of the build table 18.

The build table 18 is horizontally arranged inside the vacuum chamber 12. The build table 18 is disposed below the powder application device 16. A central portion of the build table 18 is opened. The opening shape of the build table 18 is a circle in plan view or a square in plan view (for example, a quadrangle in plan view).

The build box 20 is a box that supports the inner base 24 so as to be movable in the vertical direction. The build box 20 forms a space for stacking the metal powder 32 applied by the powder application device 16 on the inner base 24. An upper end portion of the build box 20 is connected to an opening edge of the build table 18. A lower end portion of the build box 20 is connected to a bottom wall of the vacuum chamber 12.

The collection box 21 is a box that recovers the metal powder 32 supplied more than necessary among the metal powders 32 supplied onto the build table 18 by the powder application device 16. One collection box 21 is provided on each of one side and the other side in the X direction.

The build plate 22 is a plate for forming the manufactured object 38 using the metal powder 32. The manufactured object 38 is layered and formed on the build plate 22. The build plate 22 is formed in a circular shape in plan view or a square shape in plan view in accordance with the opening shape of the build table 18. The build plate 22 is connected (grounded) to the inner base 24 by a ground wire 34 so as not to be in an electrically floating state. The inner base 24 is held at a ground (GND) potential. The metal powder 32 is spread over the build plate 22 and the inner base 24.

The inner base 24 is provided to be movable in the vertical direction (Z direction). The build plate 22 moves in the vertical direction integrally with the inner base 24. The inner base 24 has a larger outer dimension than the build plate 22. The inner base 24 slides in the vertical direction along the inner surface of the build box 20. A seal member 36 is attached to an outer peripheral portion of the inner base 24. The seal member 36 is a member that maintains slidability and sealability between the outer peripheral portion of the inner base 24 and the inner surface of the build box 20. The seal member 36 is made of a material having heat resistance and elasticity.

The plate moving device 26 is a device that moves the build plate 22 and the inner base 24 in the vertical direction. The plate moving device 26 includes a shaft 26a and a drive mechanism unit 26b. The shaft 26a is connected to the lower surface of the inner base 24. The drive mechanism unit 26b includes a motor and a power transmission mechanism (not illustrated), and drives the power transmission mechanism using the motor as a drive source to move the build plate 22 and the inner base 24 integrally with the shaft 26a in the vertical direction. The power transmission mechanism includes, for example, a rack and pinion mechanism, a ball screw mechanism, and the like.

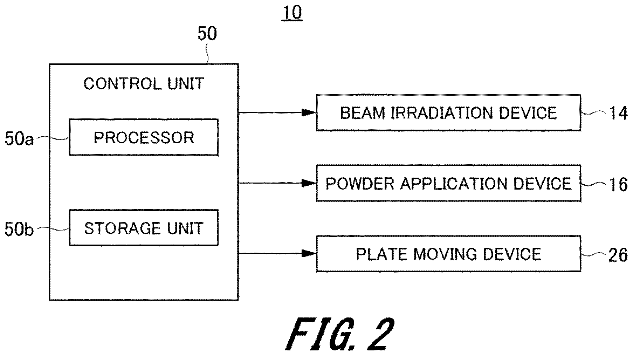

FIG. 2 is a block diagram illustrating a configuration example of a control system of the three-dimensional PBF-AM apparatus according to the first embodiment of the present invention;

In FIG. 2, the control unit 50 is configured by a computer including a processor 50a such as a central processing unit (CPU) and a storage unit 50b such as a read only memory (ROM), a random access memory (RAM), a hard disk drive (HDD), and a solid state drive (SSD). Then, the control unit 50 comprehensively controls the operation of the three-dimensional PBF-AM apparatus 10 by the processor reading a program written in the ROM in advance into the RAM and executing the program. Furthermore, the control unit 50 controls the operation of the entire three-dimensional PBF-AM apparatus 10 according to build data to be described later. The beam irradiation device 14, the powder application device 16, and the plate moving device 26 are connected to the control unit 50 as control targets.

The beam irradiation device 14 emits the electron beam 15 based on a control command given from the control unit 50. When the electron beam 15 is emitted, the control unit 50 controls the electron beam 15 via the electron gun 141, the converging lens 142, and the deflection device 143. For example, the control unit 50 controls the beam current amount of the electron beam 15 via the beam irradiation device 14. In addition, the control unit 50 controls the spot size of the electron beam 15 via the converging lens 142. The spot size of the electron beam 15 is the size of the electron beam 15 on the manufactured surface 32b. In addition, the control unit 50 controls the deflection angle and the deflection speed of the electron beam 15 via the deflection device 143. The deflection angle of the electron beam 15 is a control parameter that determines the irradiation position of the electron beam 15. The deflection speed of the electron beam 15 is a control parameter that determines the scanning speed of the electron beam 15. The scanning speed of the electron beam 15 can be rephrased as a moving speed of the electron beam 15 on the manufactured surface 32b.

The plate moving device 26 moves the build plate 22 and the inner base 24 based on a control command given from the control unit 50. The powder application device 16 applies the metal powder 32 onto the build plate 22 based on a control command given from the control unit 50 to form the powder layer 32a. The operations of the hopper 16a, the powder dropping device 16b, and the squeegee 16c included in the powder application device 16 are controlled by the control unit 50.

<Operation of Three-Dimensional PBF-AM Apparatus>

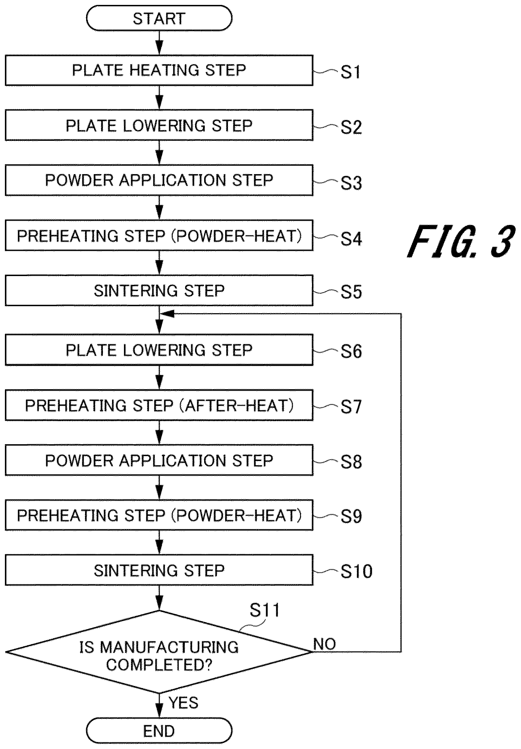

FIG. 3 is a flowchart illustrating a procedure of a processing operation of the three-dimensional PBF-AM apparatus according to the first embodiment of the present invention; The processing operation illustrated in this flowchart is performed under the control of the control unit 50.

In the state before starting the manufacturing, the periphery of the build plate 22 is covered with the metal powder 32 except for the upper surface of the build plate 22. Furthermore, the upper surface of the build plate 22 is arranged at substantially the same height as the upper surface of the metal powder 32 laid on the build table 18.

(Plate Heating Step)

First, the beam irradiation device 14 heats the build plate 22 by operating based on a control command given from the control unit 50 (step S1).

In step S1, the beam irradiation device 14 irradiates the build plate 22 with the electron beam 15. Thus, the build plate 22 is heated to a temperature at which the metal powder 32 is pre-sintered.

(Plate Lowering Step)

Next, the plate moving device 26 lowers the build plate 22 by a predetermined amount by operating based on a control command given from the control unit 50 (step S2).

In step S2, the plate moving device 26 lowers the inner base 24 by a predetermined amount so that the upper surface of the build plate 22 is slightly lower than the upper surface of the metal powder 32 laid on the build table 18. At this time, the build plate 22 is lowered by the predetermined amount together with the inner base 24. The predetermined amount (hereinafter, also referred to as "$\Delta Z$") corresponds to a thickness of one layer when the manufactured object 38 is manufactured by layering.

(Powder Application Step)

Next, the powder application device 16 operates based on a control command given from the control unit 50 to apply the metal powder 32 onto the build plate 22 to form the powder layer 32a (step S3).

In step S3, the powder application device 16 drops the metal powder 32 supplied from the hopper 16a to the powder dropping device 16b onto the build table 18 by the powder dropping device 16b, and then moves the squeegee 16c in the X direction to spread the metal powder 32 on the build plate 22. At this time, the metal powder 32 is spread on the build plate 22 with a thickness corresponding to $\Delta Z$. Thus, the powder layer 32a is formed on the build plate 22. Further, the excess metal powder 32 is collected in the collection box 21.

(Preheating Step)

Next, the beam irradiation device 14 operates based on a control command given from the control unit 50 to preheat the powder layer 32a on the build plate 22 (step S4). In the preheating step S4, the powder layer 32a is preheated in order to pre-sinter the metal powder 32. The preheating step S4 is performed before a sintering step S5 described later. As described above, the preheating step performed before the sintering step is also referred to as a powder-heat step.

In FIG. 1, reference numeral E1 denotes an unsintered region where the unsintered metal powder 32 exists, and reference numeral E2 denotes a pre-sintered region where the pre-sintered metal powder 32 exists.

(Sintering Step)

Next, the beam irradiation device 14 operates based on a control command given from the control unit 50 to sinter the metal powder 32 by melting and solidification (step S5).

In step S5, the metal powder 32 as a pre-sintered body is sintered by melting and solidifying the metal powder 32 pre-sintered as described above by irradiation with the electron beam 15. In step S5, the control unit 50 sets the cross-sectional shape of each layer cut out from the three-dimensional shape data of the target manufactured object 38 as a melting target region, and controls the beam irradiation device 14 according to the build data associated with the cross-sectional shape of each layer.

As a result, in the metal powder 32 on the build plate 22, a melting target region represented by a two-dimensional cross-sectional shape is melted by irradiation with the electron beam 15. The metal powder 32 melted by the irradiation of the electron beam 15 is solidified by natural cooling after the electron beam 15 passes. Thus, the manufactured object of the first layer is formed.

(Plate Lowering Step)

Next, the plate moving device 26 lowers the build plate 22 by a predetermined amount ($\Delta Z$) by operating based on a control command given from the control unit 50 (step S6) .

In step S6, the plate moving device 26 lowers the build plate 22 and the inner base 24 by $\Delta Z$.

(First Preheating Step)

Subsequently, the beam irradiation device 14 operates based on a control command given from the control unit 50 to preheat the powder layer 32a on the build plate 22 (step S7). In the first preheating step S7, as a preparation for spreading the metal powder 32 in the next layer, the powder layer 32a that has completed the sintering step in the previous layer is preheated. As a result, the powder layer 32a is heated to such an extent that the metal powder 32 of the next layer is pre-sintered. The preheating step S7 may be performed after the sintering step S5 described above or may be performed after a sintering step S10 described later. As described above, the preheating step performed after the sintering step is also referred to as an after-heat step.

(Powder Application Step)

Next, the powder application device 16 operates based on a control command given from the control unit 50 to apply the metal powder 32 onto the build plate 22 to form the powder layer 32a (step S8).

In step S8, the powder application device 16 operates similarly to step S3 described above. Thus, on the build plate 22, the second layer of metal powder 32 is spread over the sintered body formed of the first layer of metal powder 32 to form the powder layer 32a.

(Second Preheating Step)

Next, the beam irradiation device 14 operates based on a control command given from the control unit 50 to preheat the metal powder 32 forming the second powder layer 32a (step S9). The preheating step S9 is performed before a sintering step S10 described later. Therefore, the preheating step S9 is also referred to as a powder-heat step.

In step S9, the beam irradiation device 14 operates similarly to step S4 described above.

As a result, the metal powder 32 forming the second powder layer 32a is pre-sintered.

(Sintering Step)

Next, the beam irradiation device 14 operates based on a control command given from the control unit 50 to sinter the metal powder 32 forming the second powder layer 32a by melting and solidification (step S10).

In step S10, the beam irradiation device 14 operates similarly to step S5 described above. Thus, the manufactured object of the second layer is formed.

Next, the control unit 50 checks whether or not the manufacturing of the target manufactured object 38 is completed (step S11). When it is determined that the manufacturing of the manufactured object 38 is not completed, the control unit 50 returns to step S6 described above. As a result, the control unit 50 repeats the processes of steps S6 to S10 for each of the third and subsequent layers. When it is determined that the manufacturing of the manufactured object 38 is completed, the series of processes is ended.

By the three-dimensional powder bed fusion additive manufacturing (PBF-AM) process described above, the target manufactured object 38 is obtained.

<Configuration of Three-Dimensional PBF-AM System>

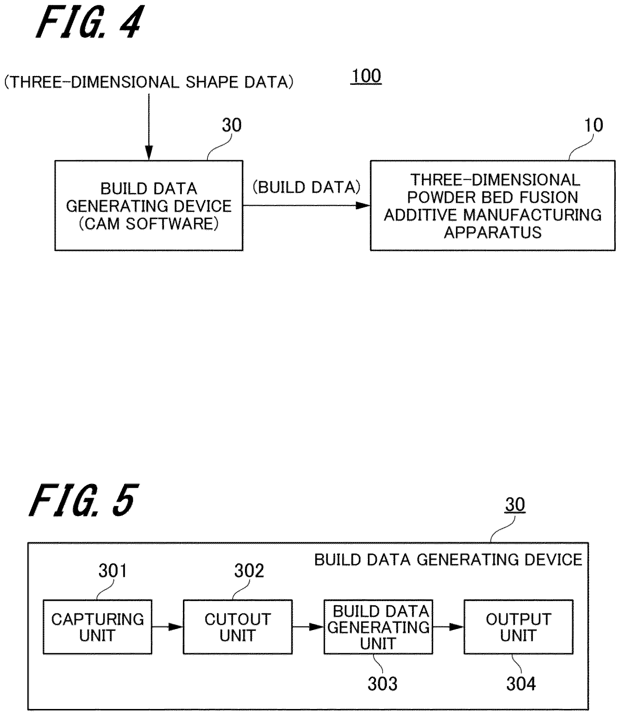

FIG. 4 is a diagram illustrating a configuration example of a three-dimensional PBF-AM system according to the first embodiment of the present invention;

As illustrated in FIG. 4, the three-dimensional PBF-AM system 100 includes the three-dimensional PBF-AM apparatus 10 and the build data generating device 30. The configuration and operation of the three-dimensional PBF-AM apparatus 10 are as described above. The build data generating device 30 generates build data using three-dimensional shape data of an article generated by three-dimensional CAD or the like. The build data generated by the build data generating device 30 is recorded, for example, in a portable recording medium, and the build data is provided to the three-dimensional PBF-AM apparatus 10 using this recording medium. The provided build data is read by the control unit 50 of the three-dimensional PBF-AM apparatus 10. The control unit 50 controls the operation of the three-dimensional PBF-AM apparatus 10 based on the build data read from the recording medium. Thus, the three-dimensional PBF-AM apparatus 10 manufactures the article according to the build data generated by the build data generating device 30.

The method of providing the build data from the build data generating device 30 to the three-dimensional PBF-AM apparatus 10 is not limited to the above-described method using the portable recording medium. For example, the build data generated by the build data generating device 30 may be provided to the three-dimensional PBF-AM apparatus 10 via a cable or a network. Furthermore, the three-dimensional PBF-AM apparatus 10 may have a configuration having each function (see FIG. 5) of the build data generating device 30.

The build data generated by the build data generating device 30 includes build data for controlling operations of the electron gun 141, the converging lens 142, and the deflection device 143, build data for controlling the powder application device 16, build data for controlling the plate moving device 26, and the like.

However, in the present specification, the generation of build data for controlling the operation of the beam irradiation device 14 will be described, and the description regarding the generation of other build data will be omitted.

<Configuration of build data Generating Device>

FIG. 5 is a block diagram illustrating a configuration example of a build data generating device according to the first embodiment of the present invention;

As illustrated in FIG. 5, the build data generating device 30 includes a capturing unit 301, a cutout unit 302, a build data generating unit 303, and an output unit 304. Although not illustrated, the build data generating device 30 is configured by a computer including a processor such as a CPU and a storage unit such as a ROM, a RAM, an HDD, and an SSD. Each function of the build data generating device 30 is implemented by the processor reading a program written in advance in the ROM into the RAM and executing the program.

The capturing unit 301 captures three-dimensional shape data necessary for generating build data. The three-dimensional shape data is data for specifying a three-dimensional shape of an article generated by three-dimensional CAD or the like.

The cutout unit 302 cuts out the cross-sectional shape of each layer with a predetermined thickness from the three-dimensional shape data captured by the capturing unit 301. This cross-sectional shape is a two-dimensional cross-sectional shape representing a shape of a region to be melted by irradiation with a beam (the electron beam 15 in the present embodiment), that is, a melting target region in each powder layer 32a. Further, the cross-sectional shape cut out by the cutout unit 302 is a shape represented by one or more closed lines.

The build data generating unit 303 generates build data by applying a predetermined manufacturing condition to the cross-sectional shape cut out by the cutout unit 302. This build data corresponds to build data (operation sequence program) for the control unit 50 to control the operation of the beam irradiation device 14 in the sintering steps S5 and S10 (FIG. 3). The manufacturing condition includes a beam scanning condition and a beam irradiation condition. The beam scanning condition is a condition applied when the surface of the powder layer 32a is scanned by the deflection device 143 with the electron beam 15. The beam irradiation condition is a condition regarding the electron gun 141 and the converging lens 142 applied when the surface of the powder layer 32a is irradiated with the electron beam 15. There are various beam scanning conditions, and there are also various beam irradiation conditions. Hereinafter, a specific example of the beam scanning conditions and a specific example of the beam irradiation conditions will be described.

The beam scanning conditions include a beam scanning method, a distance between adjacent scanning lines (interval between scanning lines), a scanning speed, and the like. In addition, the beam scanning method includes raster scanning, annual ring-shaped vector scanning, random scanning, and the like. The raster scanning is a method of generating parallel scanning lines and scanning a beam along the generated scanning lines. The raster scanning includes unidirectional raster scanning and alternating direction raster scanning. The annual ring-shaped vector scanning is a method in which scanning lines are generated inward by a certain distance from a contour line forming a cross-sectional shape, and a beam is scanned along the generated scanning lines. The vector scanning includes a scanning method other than the annual ring-shaped vector scanning. The random scanning is a method of randomly beam scanning a region having a cross-sectional shape. When the surface of the powder layer 32a is scanned by the electron beam 15, the center of the spot of the electron beam 15 moves on the scanning line.

Meanwhile, the beam irradiation conditions include the current amount of the charged particle beam controlled by the electron gun 141, the beam size in the manufactured surface controlled by the converging lens 142, and the like. The current amount of the charged particle beam corresponds to the beam current amount.

In the present embodiment, the electron beam 15 is used as the charged particle beam. Therefore, the current amount of the electron beam 15 corresponds to the current amount of the charged particle beam. The size (spot size) of the electron beam 15 on the manufactured surface 32b corresponds to the beam size on the manufactured surface. When the beam with which the surface of the powder layer 32a is irradiated is a laser beam, the beam irradiation conditions include the intensity of the laser beam (beam intensity), the beam size on the manufactured surface, and the like.

In addition, the build data generating unit 303 generates a scanning line for scanning the surface of the powder layer 32a with the electron beam 15 in the sintering step described above. That is, the build data generated by the build data generating unit 303 includes data of the scanning line. The scanning line is a line that defines a movement path (scanning path) of the electron beam 15 when a region (melting target region) having a cross-sectional shape of each layer is melted by irradiation with the electron beam 15. That is, the electron beam 15 moves on the scanning line in the region having the cross-sectional shape.

Regarding the generation of the scanning line, the build data generating unit 303 generates a plurality of scanning lines by a predetermined beam scanning method in a region having a cross-sectional shape cut out by the cutout unit 302, and generates correction scanning lines in a portion where the arrangement of the scanning lines becomes sparse and/or a portion where the arrangement of the scanning lines becomes dense. The scanning line generation processing by the build data generating unit 303 will be described in detail later.

The output unit 304 outputs the build data generated by the build data generating unit 303 to the electronic file. The build data output to the electronic file is provided to the three-dimensional PBF-AM apparatus 10 by the above-described method (for example, a method using a portable recording medium). Furthermore, in a case where the article to be manufactured is, for example, manufactured by powder bed fusion additive manufacturing in 100 layers, build data for 100 layers is provided to the three-dimensional PBF-AM apparatus 10. Then, the control unit 50 of the three-dimensional PBF-AM apparatus 10 sequentially controls the operation of the entire three-dimensional PBF-AM apparatus 10 according to the build data provided from the build data generating device 30.

<Processing Procedure of build data Generating Device>

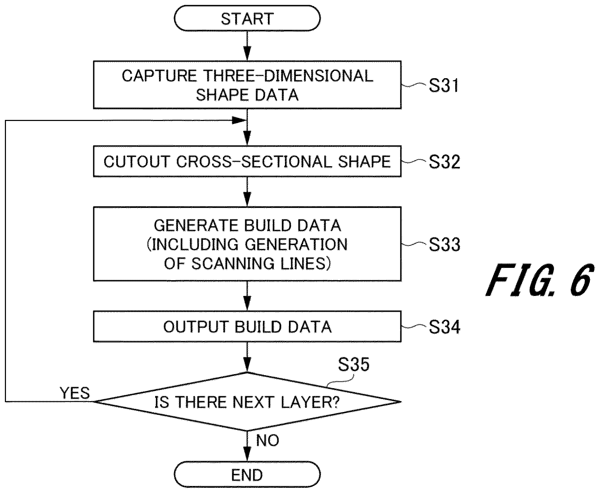

FIG. 6 is a flowchart illustrating an example of a processing procedure (build data generating method) of the build data generating device according to the first embodiment of the present invention.

First, the capturing unit 301 captures three-dimensional shape data (step S31).

Next, the cutout unit 302 cuts out a cross-sectional shape of one layer from the three-dimensional shape data (step S32). The one layer includes one or a plurality of cross-sectional shapes.

Next, the build data generating unit 303 generates build data by applying a predetermined manufacturing condition to the cross-sectional shape cut out by the cutout unit 302 (step S33). The scanning line generation processing by the build data generating unit 303 is performed in step S33.

Next, the output unit 305 outputs the build data generated by the build data generating unit 303 in step S33 to the electronic file (step S34).

Next, the build data generating device 30 determines whether there is a next layer (step S35).

This determination in step S35 is performed, for example, by the cutout unit 302. Then, in a case where there is the next layer (in a case of YES in step S35), the process returns to step S32 described above, and in a case where there is no next layer (in a case of No in step S35), the series of processes is ended.

<Scanning Line Generation Processing>

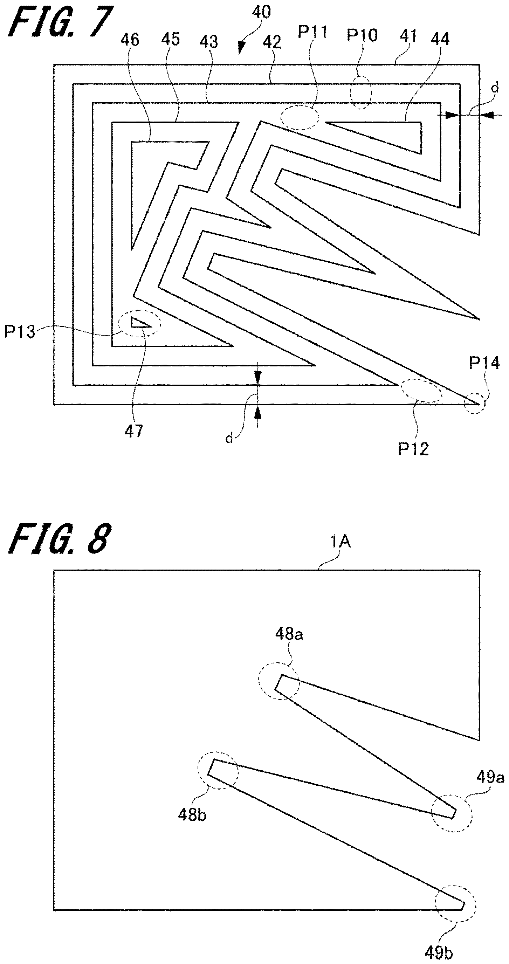

Next, the scanning line generation processing performed by the build data generating unit 303 will be described in detail with reference to FIGS. 7 to 20.

First, as illustrated in FIG. 7, the build data generating unit 303 generates a plurality of scanning lines 41 to 47 in a region of the cross-sectional shape 40 cut out by the cutout unit 302 by a predetermined beam scanning method. In the first embodiment, the build data generating unit 303 generates a plurality of scanning lines in the region of the cross-sectional shape 40 by the annual ring-shaped vector scanning method. As described above, the annual ring-shaped vector scanning method (hereinafter, also simply referred to as a "vector scanning method") is a method of generating scanning lines inward by a certain distance from a contour line forming a cross-sectional shape. Therefore, the plurality of scanning lines generated by the vector scanning method are concentric scanning lines. As illustrated in FIG. 7, the plurality of scanning lines generated by the vector scanning method may include scanning lines 41, 42, and 43 generated along the contour line of the cross-sectional shape 40 in a shape similar to the contour line, and scanning lines 44, 45, 46, and 47 generated in an island shape in a shape different from the contour line of the cross-sectional shape 40. The plurality of scanning lines 41 to 47 correspond to the concentric scanning lines generated by the annual ring-shaped vector scanning method.

As described above, when the plurality of scanning lines 41 to 47 are generated in the region of the cross-sectional shape 40 by the vector scanning method, as illustrated in FIG. 7, portions P11 and P12 in which the arrangement of the scanning lines is sparser than other portions, and portions P13 and P14 in which the arrangement of the scanning lines is denser than other portions may occur. The other portion is, for example, a portion indicated by reference numeral P10 in FIG. 7. In FIG. 7, for convenience, two portions in which the arrangement of the scanning lines becomes sparse and two portions in which the arrangement of the scanning lines becomes dense are illustrated, but there are other portions in which the arrangement of the scanning lines becomes sparse and other portions in which the arrangement of the scanning lines becomes dense. In the portions P11 and P12 where the arrangement of the scanning lines becomes sparse, the scanning lines are excessively separated from each other. Therefore, when the cross-sectional shape 40 to be the melting target region in the sintering step is beam scanned along the scanning line, melting defects due to insufficient melting are likely to occur in the portions P11 and P12 where the arrangement of the scanning lines becomes sparse. The melting defects due to insufficient melting are defects caused by insufficient amount of beam irradiation energy. On the other hand, in the portions P13 and P14 where the arrangement of the scanning lines becomes dense, the scanning lines are excessively close to each other. Therefore, when the cross-sectional shape 40 to be the melting target region in the sintering step is beam scanned along the scanning line, melting defects due to excessive melting are likely to occur in the portions P13 and P14 where the arrangement of the scanning lines becomes dense. The melting defects due to excessive melting are defects caused by excessive amount of beam irradiation energy.

Therefore, the build data generating unit 303 performs processing for generating correction scanning lines in the portions P11 and P12 where the arrangement of the scanning lines becomes sparse and the portions P13 and P14 where the arrangement of the scanning lines becomes dense.

The correction scanning line is generated to prevent the occurrence of the above-described melting defect. The build data generating unit 303 generates the correction scanning line by morphological graphic processing described below. In this morphological graphic processing, an interval between the scanning lines applied when the plurality of scanning lines 41 to 47 are generated by the above-described annual ring-shaped vector scanning method is d ($\mu$m) (see FIG. 7). A portion denoted by reference numeral P10 in FIG. 7 corresponds to a portion of the scanning lines arranged at the interval d. The interval d between the scanning lines is an interval (distance between the scanning lines) defined by parallel portions of two adjacent scanning lines (for example, scanning line 41 and scanning line 42). The value of the interval d of the scanning lines is designated (input) in advance by the user together with the beam size in the manufactured surface, for example.

In the morphological graphic processing, a constant a, a constant b, and a constant $\varepsilon$ defined below are used.

```
Constant a = 1/3

Constant b = √2
```

The constant ε is a value larger than the calculation rounding error assumed to occur in the computer and smaller than the manufacturing dimension reproduction accuracy of the three-dimensional PBF-AM apparatus 10. The constant ε is a value determined on the CAM software program, and the unit is μm.

Furthermore, in the present embodiment, it is assumed that the cross-sectional shape 40 cut out by the cutout unit 302 is a polygon, and this polygon is, for example, a figure expressed by designating coordinates of vertices with a numerical value. It is assumed that a polygon 1A illustrated in FIG. 8 is a figure represented by a scanning line generated n-th from the outermost periphery of a cross-sectional shape 40 cut out by the cutout unit 302 and determined by the build data generating unit 303 as an n-th annual ring-shaped scanning line (not including a correction scanning line) by morphological graphic processing. Specifically, the polygon 1A is a figure generated by the following procedure. First, the build data generating unit 303 generates a figure obtained by enlarging the figure represented by the scanning line 41 by a predetermined amount as a figure represented by an imaginary scanning line that is not actually output. As the predetermined amount, a value as closest to the interval d between the scanning lines (see FIG. 7) as possible is selected within a range in which self-intersection does not occur even when the figure represented by the scanning line 41 is enlarged by the predetermined amount. Next, the build data generating unit 303 performs morphological graphic processing (details will be described later) with the figure represented by the imaginary scanning line as the first processing target, and determines the annual ring-shaped scanning line and the correction scanning line corresponding to the annual ring-shaped scanning line generated by the graphic processing as the first scanning line and the correction scanning line. When a part of the correction scanning line generated by performing the morphological graphic processing protrudes to the outside of the scanning line 41, the build data generating unit 303 deletes the protruding portion of the correction scanning line. A polygon 1A illustrated in FIG. 8 is a figure represented by the annual ring-shaped scanning line determined as the first scanning line by the build data generating unit 303. The polygon 1A has inward acute angle vertices 48a and 48b and outward acute angle vertices 49a and 49b.

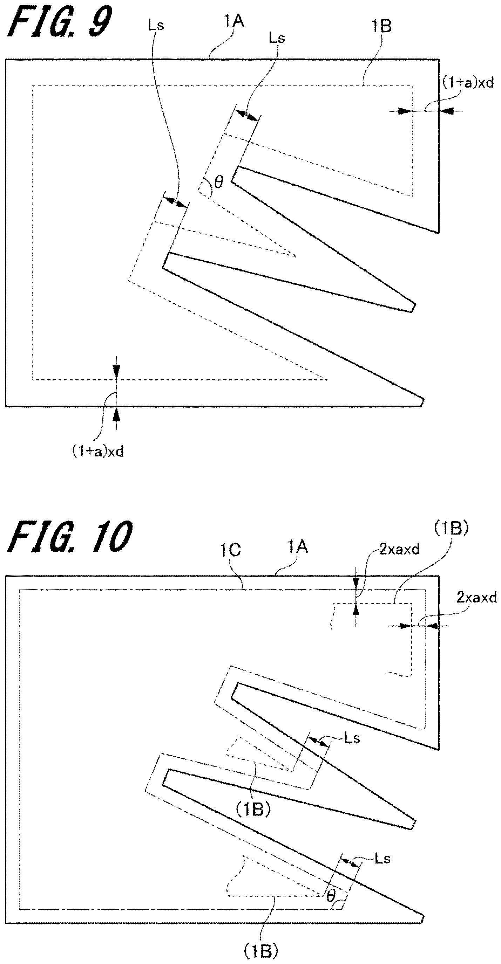

First, as illustrated in FIG. 9, the build data generating unit 303 generates a polygon 1B (a figure indicated by a broken line in FIG. 9) by reducing (contracting) the polygon 1A by a dimension of (1 + a) × d. In this reduction processing, with respect to the inward acute angle vertices 48a and 48b described above, the movement amount Ls is limited such that the movement amount Ls of each of the acute angle vertices 48a and 48b is equal to or less than a × d × b. That is, a portion where the movement amount Ls of the acute angle vertices 48a and 48b exceeds a × d × b is cut out by the reduction processing. As a result, even if the end of the inward acute angle vertex 48a of the polygon A1 is pointed, the angle θ of the inward acute angle vertex of the polygon 1B can be made obtuse. On the other hand, regarding the outward acute angle vertices 49a and 49b, it is not necessary to set a limitation on the movement amount. For this reason, the outward acute angle vertices 49a and 49b of the polygon 1A may be in a state (shape) where the end of the acute angle vertex is pointed as in the polygon 1B illustrated in FIG. 9.

Next, as illustrated in FIG. 10, the build data generating unit 303 generates a polygon 1C (a figure indicated by an alternate long and short dash line in FIG. 10) by enlarging (expanding) the polygon 1B by a dimension of 2 × a × d. In this enlargement processing, with respect to the outward acute angle vertices 49a and 49b described above, the movement amount Ls is limited such that the movement amount Ls of the outward acute angle vertices in the polygon 1B is equal to or less than a × d × b. As a result, the angle θ of the outward acute angle vertex of the polygon 1C can be made an obtuse angle. On the other hand, regarding the inward acute angle vertex of the polygon 1B, there is no need to set a limitation on the movement amount.

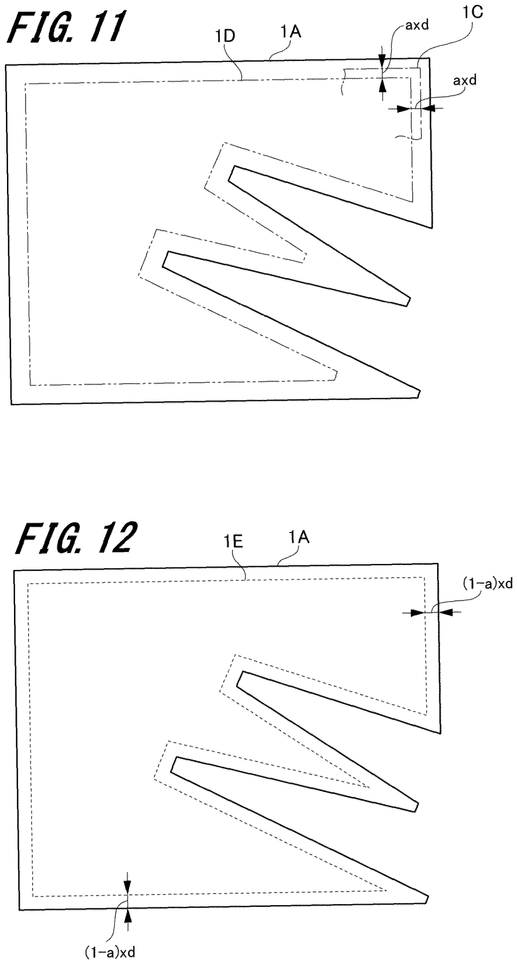

Next, as illustrated in FIG. 11, the build data generating unit 303 generates a polygon 1D (a figure indicated by a two-dot chain line in FIG. 11) by reducing (contracting) the polygon 1C by a dimension of a × d. The build data generating unit 303 determines one closed line representing the shape (contour) of the polygon 1D as an (n+1)-th annual ring-shaped scanning line.

Next, as illustrated in FIG. 12, the build data generating unit 303 generates a polygon 1E (a figure indicated by a broken line in FIG. 12) by reducing the polygon 1A by a dimension of (1 - a) × d.

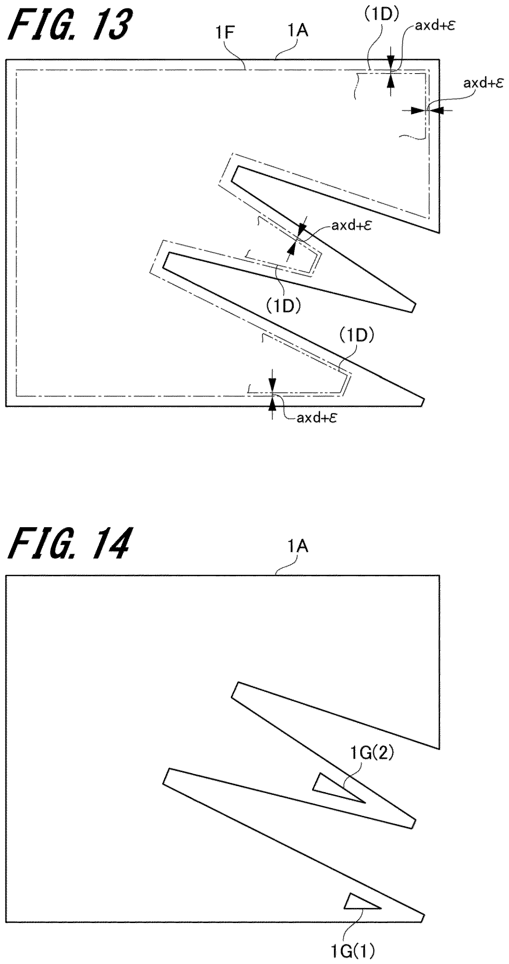

Next, as illustrated in FIG. 13, the build data generating unit 303 generates a polygon 1F (a figure indicated by an alternate long and short dash line in FIG. 13) by enlarging the polygon 1D illustrated in FIG. 11 by a dimension of a × d + ε.

Next, as illustrated in FIG. 14, the build data generating unit 303 generates (extracts) 0 or more polygons 1G(i) by deleting the region of the polygon 1F illustrated in FIG. 13 from the region of the polygon 1E illustrated in FIG. 12. The subscript i in the polygon 1G(i) is an integer of 1 or more, and has a value that depends on the shape of the original figure (see FIG. 8). Thus, when the number of polygons 1G generated by the build data generating unit 303 is m (the maximum value of i is m), the build data generating unit 303 generates polygons 1G(1), 1G(2),..., and 1G(m). The polygon 1G(i) is a portion where occurrence of a melting defect (melting defects due to insufficient melting, melting defects due to excessive melting, and the like) is predicted when a beam is scanned along the plurality of scanning lines 41 to 47 illustrated in FIG. 7. That is, the build data generating unit 303 generates the polygon 1G(i) to specify the portion of the polygon 1G(i) as the portion where the occurrence of the melting defect is predicted. FIG. 14 illustrates a case where two polygons 1G(1) and 1G(2) are generated, that is, a case where m = 2.

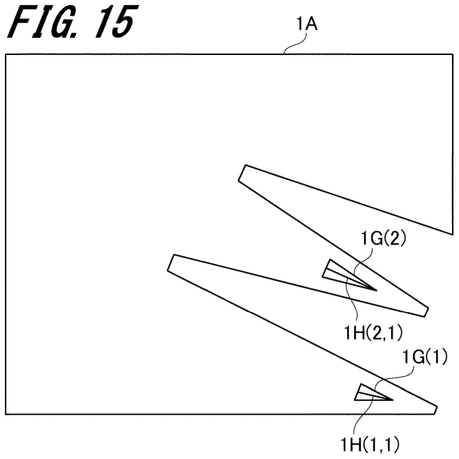

Next, as illustrated in FIG. 15, the build data generating unit 303 generates a predetermined line 1H(i, j) in the region of each polygon 1G(1), 1G(2),..., 1G(m) for the polygon 1G(i). The predetermined line 1H(i, j) is a line generated as a correction scanning line. In other words, the build data generating unit 303 generates the correction scanning line at a portion where the occurrence of the melting defect is predicted when the beam is scanned along the plurality of scanning lines 41 to 47 illustrated in FIG. 7. The subscript i in the predetermined line 1H(i, j) is the same as the subscript i in the polygon 1G(i) described above. The subscript j in the predetermined line 1H(i, j) is a natural number indicating the number of predetermined lines 1H generated in the region of one polygon 1G(i). That is, j = 1,..., k. The maximum value k of j takes one or more different values depending on the shape of the polygon 1G(i). FIG. 15 illustrates a case where the predetermined line 1H(1, 1) is generated in the region of the polygon 1G(1) and the predetermined line 1H(2, 1) is generated in the region of the polygon 1G(2). The predetermined line 1H(i, j) is preferably a straight line, a polygonal line, or a branched line that is a middle line of the polygon 1G(i).

The predetermined line 1H(i, j) is a line capable of one-way scanning from one end to the other end of the predetermined line 1H(i, j). As illustrated in FIG. 7, each of the plurality of scanning lines 41 to 47 generated by the annual ring-shaped vector scanning method is represented by one closed line, but the predetermined line 1H(i, j) is a non-closed line. Specifically, the predetermined line 1H(i, j) is a line corresponding to at least one of a straight line, a polygonal line, and a branched line. When the predetermined line 1H(i, j) is not branched, the value of j becomes 1. Further, when the predetermined line 1H(i, j) is branched, the value of j becomes 2 or more.

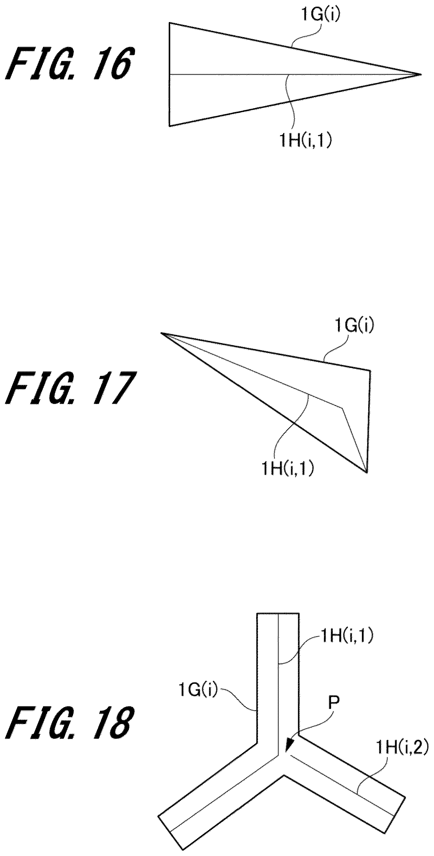

FIG. 16 illustrates a case where the predetermined line 1H(i, j) generated in the region of the polygon 1G(i) is a straight line. The predetermined line 1H(i, j) is one straight line 1H(i, 1) passing through the center in the short direction of the polygon 1G(i) from one end to the other end in the longitudinal direction of the polygon 1G(i) .

FIG. 17 illustrates a case where the predetermined line 1H(i, j) generated in the region of the polygon 1G(i) is a polygonal line. The predetermined line 1H(i, j) is one polygonal line 1H(i, 1) that passes through the center in the short direction of the polygon 1G(i) from one end to the other end in the longitudinal direction of the polygon 1G (i) and is bent halfway.

FIG. 18 illustrates a case where the predetermined line 1H(i, j) generated in the region of the polygon 1G (i) is a branched line. The predetermined line 1H(i, j) is a branched line having a line 1H(i, 1) bent from one end toward the other end of the polygon 1G(i) and a line 1H(i, 2) branched from the middle of the line 1H(i, 1). The line 1H(i, 1) and the line 1H(i, 2) are separated from each other at a P portion in FIG. 18. By separating the line 1H(i,1) and the line 1H(i, 2) at the P portion, it is possible to avoid excessive injection of the beam irradiation energy into the vicinity of the P portion.

In this manner, the build data generating unit 303 generates the predetermined line 1H(i, j) in the region of each polygon 1G(i). In other words, the build data generating unit 303 generates the predetermined line 1H(i, j) for each polygon 1G(i). Then, the build data generating unit 303 determines all the generated predetermined lines 1H(i, j) as correction scanning lines corresponding to the (n+1)-th annual ring-shaped scanning lines.

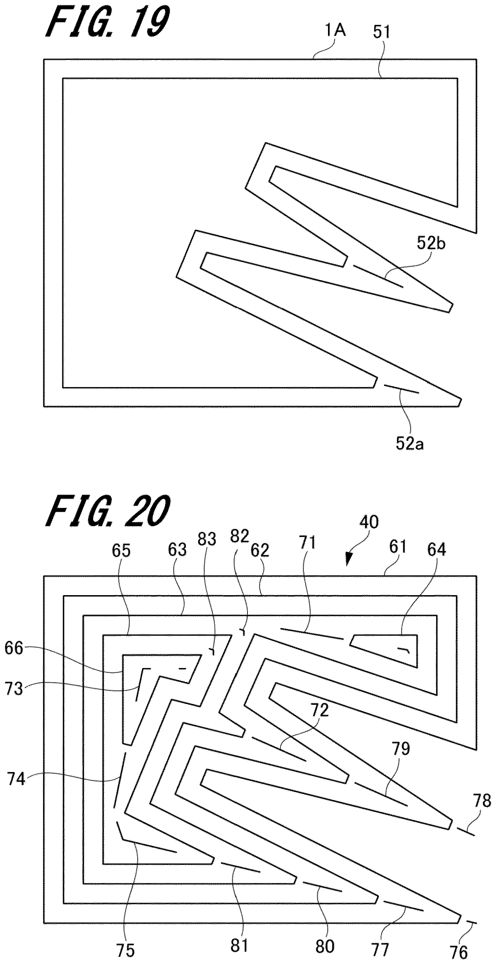

As a result, as illustrated in FIG. 19, the build data generating unit 303 generates an (n+1)-th annual ring-shaped scanning line 51 and correction scanning lines 52a and 52b corresponding to the scanning line 51. The scanning line 51 is a line representing the polygon 1D illustrated in FIG. 11. The correction scanning line 52a is a line corresponding to the predetermined line 1H(1,1) illustrated in FIG. 15. The correction scanning line 52b is a line corresponding to the predetermined line 1H(2, 1) illustrated in FIG. 15. The scanning line 51 is one closed line, and the correction scanning lines 52a and 52b are non-closed lines.

The build data generating unit 303 executes the morphological graphic processing described with reference to FIGS. 8 to 19 for each polygon for the polygon represented by each of the scanning lines 41 to 47 illustrated in FIG. 7. Furthermore, the build data generating unit 303 starts the process from a polygon indicating the contour line of the cross-sectional shape of the manufactured object or a polygon expanded or contracted by a certain distance from the contour line. Then, the above-described morphological graphic processing is repeated for all the polygons represented by the scanning lines 41 to 47. As a result, as illustrated in FIG. 20, the build data generating unit 303 generates a plurality of annual ring-shaped scanning lines 61 to 66 and a plurality of correction scanning lines 71, 72, 73, 74, 75, 76, 77,... in the region of the cross-sectional shape 40 cut out from the three-dimensional shape data of the article.

Here, the correspondence relationship between the plurality of scanning lines 41 to 47 illustrated in FIG. 7 and the plurality of scanning lines 61 to 66 and correction scanning lines illustrated in FIG. 20 is as follows. The scanning line 41 corresponds to the scanning line 61, the correction scanning line 76, and the correction scanning line 78, the scanning line 42 corresponds to the scanning line 62, the correction scanning line 77, and the correction scanning line 79, and the scanning line 43 corresponds to the scanning line 63, the correction scanning line 72, and the correction scanning line 80. Furthermore, the scanning line 44 corresponds to the scanning line 64 and the correction scanning line 71, the scanning line 45 corresponds to the scanning line 65, the correction scanning line 81, and the correction scanning line 82, and the scanning line 46 corresponds to the scanning line 66, the correction scanning line 74, and the correction scanning line 83.

As can be seen from FIGS. 7 and 20, the correction scanning line 71 is added to the portion P11 where the arrangement of the scanning lines becomes sparse, and the correction scanning line 77 is added to the portion P12 where the arrangement of the scanning lines becomes sparse. On the other hand, the scanning line 47 is replaced with the correction scanning line 75 in the portion P13 where the arrangement of the scanning lines becomes dense, and a part (pointed portion) of the scanning line 41 is replaced with the correction scanning line 76 in the portion P14 where the arrangement of the scanning lines becomes dense. That is, the build data generating unit 303 adds the correction scanning line to the portion where the arrangement of the scanning lines becomes sparse, and replaces the scanning line with the correction scanning line in the portion where the arrangement of the scanning lines becomes dense. The same applies to a portion not denoted by a reference numeral in FIGS. 7 and 20 (portion that becomes sparse and portion that becomes dense).

As a result, when the build data generating unit 303 of the build data generating device 30 generates the build data, it is possible to prevent the scanning lines from being too far or too close, which may cause the melting defect, and to reduce the variation in density of the scanning lines. Furthermore, in the sintering step, the control unit 50 controls the beam irradiation device 14 according to the build data generated in advance by the build data generating unit 303, so that the electron beam 15 is scanned along the plurality of scanning lines 61 to 66 and the plurality of correction scanning lines 71, 72, 73, 74, 75, 76, 77,... to manufacture the article. Therefore, in the three-dimensional PBF-AM apparatus 10, when an article is manufactured by melting the cross-sectional shape of each layer by irradiation (scanning) of the electron beam 15, the occurrence of melting defects due to insufficient melting or excessive melting can be prevented.

Note that the order in which the beam irradiation device 14 of the three-dimensional PBF-AM apparatus 10 scans the plurality of scanning lines (61 to 66) and the plurality of correction scanning lines (71, 72, 73, 74, 75, 76, 77,...) generated by the build data generating unit 303 of the build data generating device 30 with the electron beam 15 can be arbitrarily set.

For example, the plurality of scanning lines (61 to 66) may be beam scanned first from the outer scanning line, or may be beam scanned first from the inner scanning line. Adjacent scanning lines (61 to 66) may be sequentially beam scanned, or beam scanning may be repeated while several scanning lines are skipped. The plurality of scanning lines (61 to 66) may be beam scanned in a completely random order. When the plurality of scanning lines (61 to 66) are beam scanned in any order, all the scanning lines (61 to 66) need to be beam scanned.

For the plurality of correction scanning lines (71, 72, 73, 74, 75, 76, 77,...), each time one annual ring-shaped scanning line is beam scanned, the correction scanning line associated with the scanning line may be beam scanned. The plurality of correction scanning lines (71, 72, 73, 74, 75, 76, 77,...) may be beam scanned before the plurality of annual ring-shaped scanning lines (61 to 66) are beam scanned or after the plurality of annual ring-shaped scanning lines (61 to 66) are beam scanned.

Furthermore, the same manufacturing condition may be applied or different manufacturing conditions may be applied when beam scanning is performed with the plurality of scanning lines (61 to 66) and when beam scanning is performed with the plurality of correction scanning lines (71, 72, 73, 74, 75, 76, 77,...). When different manufacturing conditions are applied, at least one of the scanning speed, the beam size in the manufactured surface, the beam current amount, and the beam intensity may be different.

<Second Embodiment>

Next, a second embodiment of the present invention will be described. The configuration and operation of the three-dimensional PBF-AM apparatus 10 and the configuration of the three-dimensional PBF-AM system 100 according to the second embodiment of the present invention are similar to those of the first embodiment described above. However, in the second embodiment of the present invention, the content of the scanning line generation processing (morphological graphic processing) performed by the build data generating unit 303 of the build data generating device 30 is different.

<Scanning Line Generation Processing>

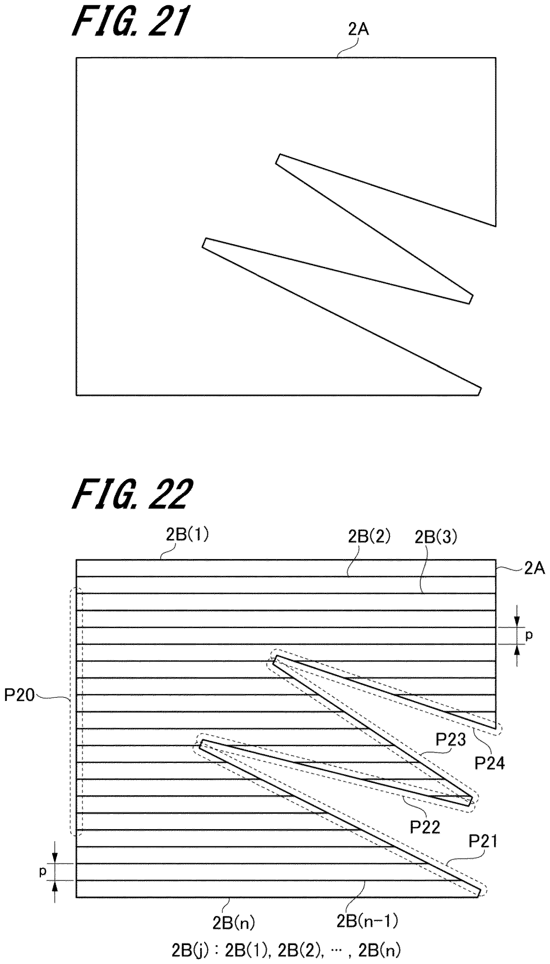

First, the build data generating unit 303 generates a plurality of scanning lines in a region of the cross-sectional shape cut out by the cutout unit 302 by a predetermined beam scanning method. In the first embodiment described above, the annual ring-shaped vector scanning method is adopted as the predetermined beam scanning method, but in the second embodiment, the raster scanning method is adopted. FIG. 21 illustrates an example of a cross-sectional shape to be melted by raster scanning. A figure representing the cross-sectional shape illustrated in FIG. 21 is a polygon 2A.

As illustrated in FIG. 22, the build data generating unit 303 generates a plurality of scanning lines 2B(j) by the raster scanning method in a region having a cross-sectional shape (polygon 2A) illustrated in FIG. 21. The subscript j in the scanning line 2B(j) is a natural number. When the number of scanning lines generated in the region of the cross-sectional shape by the build data generating unit 303 is n, j = 1, 2, 3,..., n. The plurality of scanning lines 2B(j) are scanning lines parallel to each other, that is, parallel line-shaped scanning lines (hereinafter, also referred to as a "raster scanning line"). Furthermore, the build data generating unit 303 generates the plurality of scanning lines 2B(j) at a predetermined interval p ($\mu$m). The interval p corresponds to a distance between adjacent scanning lines in a direction orthogonal to the scanning line 2B(j) (vertical direction in FIG. 22). The value of the interval p of the scanning lines is designated (input) in advance by the user together with the beam size in the manufactured surface, for example. As a method of generating the plurality of scanning lines 2B(j), for example, a method of generating the scanning lines 2B(j) as a logical product portion of a raster scanning line that sufficiently covers the polygon 2A and a region of the polygon 2A can be considered.

Here, as illustrated in FIG. 22, when the plurality of scanning lines 2B(j) is generated in the region having the cross-sectional shape represented by the polygon 2A by the raster scanning method, a portion where the arrangement of the scanning lines becomes sparse as compared with other portions occurs. Specifically, among the contours of the cross-sectional shape represented by the polygon 2A, in contour portions P21, P22, P23, and P24 inclined with respect to the scanning line 2B(j), the arrangement of the scanning line 2B(j) becomes sparse as compared with other portions (for example, a portion indicated by P20). The reason why the arrangement of the scanning lines 2B(j) is sparse at the oblique contour portions P21, P22, P23, and P24 is that the ends of the respective scanning lines 2B(j) are shifted in the left-right direction of FIG. 22 due to the inclination of the contour of the cross-sectional shape (polygon 2A), whereby the distance between the ends of the scanning lines 2B(j) becomes longer than the other portions. The other portion is, for example, a portion indicated by reference numeral P20 in FIG. 22. The portion indicated by the reference numeral P20 is a portion perpendicular to the scanning line 2B(j). In the portion indicated by the reference numeral P20, the ends of the respective scanning lines 2B(j) are positioned substantially on the same line without being shifted in the left-right direction in FIG. 22.

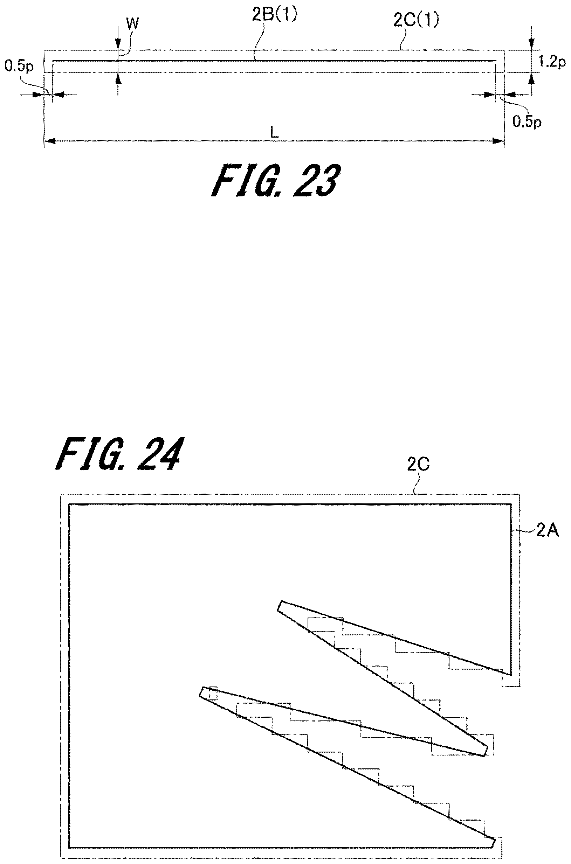

When the cross-sectional shape (polygon 2A) to be the melting target region is subjected to beam scanning along the plurality of scanning lines 2B(j) in the sintering step, the above-described contour portions P21, P22, P23, and P24 are formed with stepped irregularities as shown in FIG. 24, for example. When such irregularities appear on the surface of the manufactured object, it is necessary to remove the irregularities by subjecting the manufactured object obtained by powder bed fusion additive manufacturing to post-processing treatment. In particular, when the manufactured object is formed of a difficult-to-cut material, the time required for the post-processing treatment becomes long, and thus the production efficiency deteriorates.

Therefore, the build data generating unit 303 performs processing for generating correction scanning lines on the contour portions P21, P22, P23, and P24 where the arrangement of the scanning lines becomes sparse. The correction scanning line is generated in order to reduce the irregularities of the surface or to prevent the occurrence of the melting defect. The build data generating unit 303 generates the correction scanning line by morphological graphic processing described below.

First, for each of the plurality of scanning lines 2B(j) generated as described above, the build data generating unit 303 estimates (assumes) a range in which melting and solidification occur when beam scanning is performed along the scanning line 2B(j) by calculation, simulation, or the like. Here, as an example, as illustrated in FIG. 23, a range (hereinafter, also referred to as a "melting range") in which melting and solidification occur when beam scanning is performed along the scanning line 2B(1) is a range of a rectangle 2C(1) that is a polygon having an appropriate width in each of the traveling direction of the scanning line 2B(1) and a direction perpendicular to the traveling direction. In the sintering step, the spot of the electron beam 15 moves on the scanning line 2B(1). Therefore, the build data generating unit 303 assumes a range of the rectangle 2C(1) centered on the scanning line 2B(1) as a range in which melting and solidification occur. Furthermore, the build data generating unit 303 assumes that the length L of the rectangle 2C(1) is longer than the length of the scanning line 2B(1). Furthermore, the build data generating unit 303 assumes the width W of the rectangle 2C(1) centered on the position of the scanning line 2B(1). FIG. 23 illustrates, as an example, an example in which the length L of the rectangle 2C(1) is assumed to be longer than the length of the scanning line 2B(1) by 0.5 times, that is, by 0.5p, the interval p (see FIG. 22) between the scanning lines at one end and the other end. Furthermore, in FIG. 23, as an example, an example is illustrated in which the width W of the rectangle 2C(1) is assumed to be 1.2 times the interval p of the scanning lines, that is, 1.2p.

Thus, the build data generating unit 303 assumes the melting range using a constant multiple of the interval p of the scanning lines. The melting range is preferably defined separately in a length direction of the scanning line 2B(1) and a direction orthogonal to the length direction. This is because when the electron beam 15 is scanned along the raster scanning line, the amount of energy injected by the irradiation of the electron beam 15 is different between the vicinity of the end in the length direction of the raster scanning line and a portion other than the vicinity of the end. Specifically, the cumulative irradiation time of the electron beam 15 is shorter in the end in the length direction of the raster scanning line than in a portion other than the end in the length direction, and the amount of energy injected is less because of the shorter cumulative irradiation time of the electron beam 15. Therefore, in order to more accurately assume the melting range, it is reasonable to make the constant applied to the calculation of the length L of the rectangle 2C(1) smaller than the constant applied to the calculation of the width W of the rectangle 2C(1).

The build data generating unit 303 obtains rectangles 2C(2), 2C(3),..., and 2C(n) indicating assumed melting ranges for the other scanning lines 2B(2), 2B(3),..., and 2B(n) as in the case of the scanning line 2B(1) described above. Furthermore, the build data generating unit 303 combines (fuses) all the rectangles 2C(1), 2C(2), 2C(3),..., and 2C(n) indicating the assumed melting range to generate a polygon 2C (a figure indicated by an alternate long and short dash line in FIG. 24) as illustrated in FIG. 24.

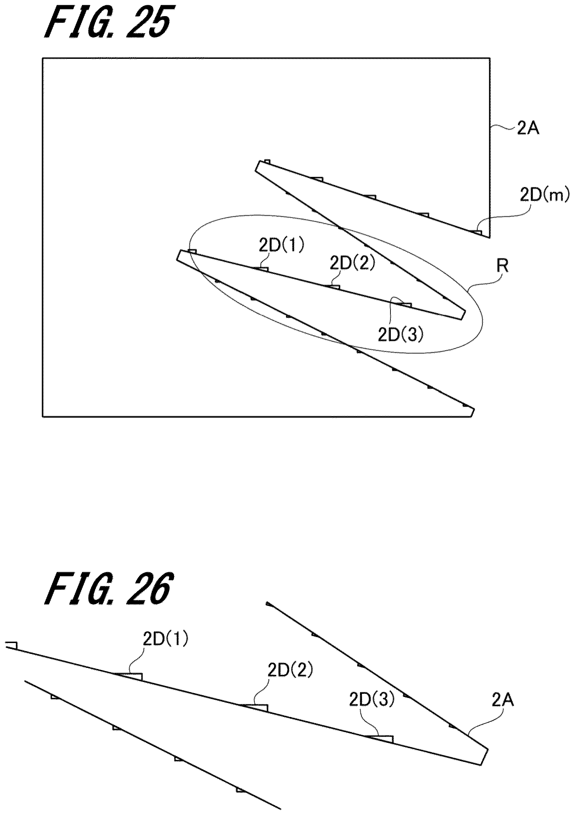

Next, as illustrated in FIG. 25, the build data generating unit 303 generates (extracts) the remaining region obtained by removing the region of the polygon 2C from the region of the polygon 2A as 0 or more polygons 2D (i). A subscript i in the polygon 2D(i) is an integer of 1 or more. Thus, when the number of polygons 2D generated by the build data generating unit 303 is m (the maximum value of i is m), the build data generating unit 303 generates polygons 2D(1), 2D(2),..., and 2D(m). That is, the value of m indicates the number of polygons 2D(i) generated by the build data generating unit 303. The polygons 2D(1), 2D(2),..., and 2D(m) are portions where occurrence of a melting defect (such as a melting defect due to insufficient melting) or a recess is predicted when a beam is scanned along the scanning line 2B(j) illustrated in FIG. 22. That is, the build data generating unit 303 generates the polygon 2D(i) to specify the portion of the polygon 2D(i) as the portion where the occurrence of the melting defect or the recess is predicted. In this case, a portion where each of the polygons 2D(1), 2D(2),..., and 2D(m) exists corresponds to a portion where the arrangement of the scanning line 2B(j) becomes sparse in the oblique contour portions P21, P22, P23, and P24 illustrated in FIG. 22. In FIG. 25, only some polygons 2D(i) among the plurality of polygons 2D(i) generated by the build data generating unit 303 are denoted by reference numerals. FIG. 26 is an enlarged view of an R portion in FIG. 25. When the build data generating unit 303 does not generate any polygon 2D(i), the build data generating unit 303 does not generate the correction scanning line.

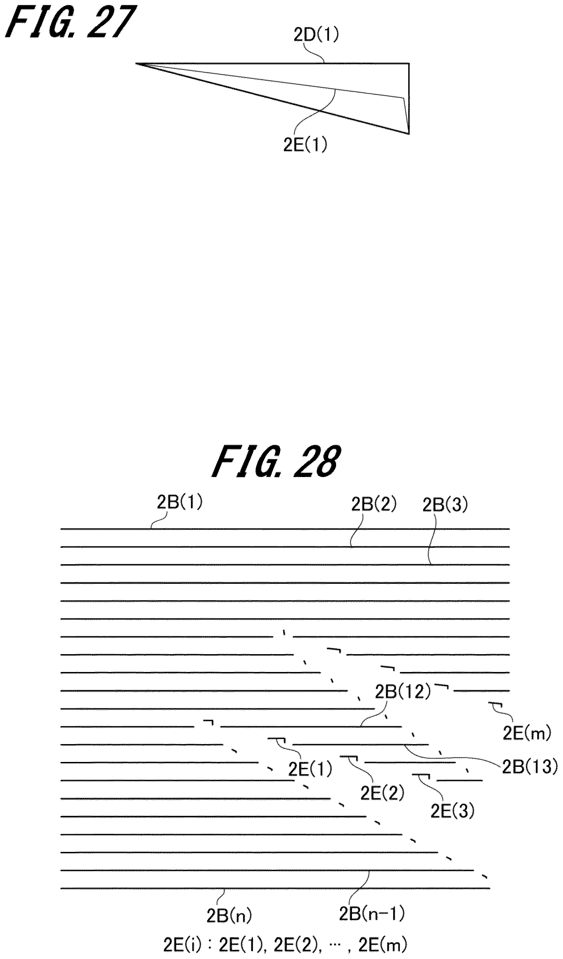

On the other hand, when the build data generating unit 303 generates one or more polygons 2D(i), the build data generating unit 303 generates a predetermined line 2E(i) in the region of each polygon 2D(i) as illustrated in FIG. 27. The predetermined line 2E(i) is a line generated as a correction scanning line. In other words, the build data generating unit 303 generates a correction scanning line at a portion where occurrence of a melting defect (such as a melting defect due to insufficient melting) or a recess is predicted when a beam is scanned along the scanning line 2B(j) illustrated in FIG. 22. The subscript i in the predetermined line 2E(i) is the same as the subscript i in the polygon 2D(i) described above. That is, the minimum value of i is 0, and the maximum value of i is m. In this case, the value of m indicates the number of correction scanning lines generated by the build data generating unit 303. The predetermined line 2E(i) is a line capable of one-way scanning from one end to the other end of the predetermined line 2E(i). In addition, the predetermined line 2E(i) is a line that is not closed.

FIG. 27 illustrates, as an example, a case where the build data generating unit 303 generates a predetermined line 2E(1) in the region of the polygon 2D(1). The predetermined line 2E(1) is one polygonal line that passes through the center in the short direction of the polygon 2D(1) from one end to the other end in the longitudinal direction of the polygon 2D(1) and is bent halfway. However, the predetermined line 2E(1) may be one straight line passing through the center in the short direction of the polygon 2D(1) from one end to the other end in the longitudinal direction of the polygon 2D(1). The build data generating unit 303 generates predetermined lines 2E(2), 2E(3),..., 2E(m) for the other polygons 2D(2), 2D(3),..., 2D(m) as in the case of the polygon 2D(1). Then, the build data generating unit 303 determines all the generated predetermined lines 2E(i) as correction scanning lines corresponding to the cross-sectional shape of the polygon 2A.

Thus, as illustrated in FIG. 28, the build data generating unit 303 generates a plurality of scanning lines 2B(j) and a plurality of correction scanning lines 2E(i). The plurality of scanning lines 2B(j) are parallel line-shaped scanning lines generated by the raster scanning method as illustrated in FIG. 22. As can be seen from FIG. 28, the correction scanning line 2E(i) is generated between the adjacent scanning lines 2B(j) in a direction (vertical direction in FIG. 28) orthogonal to the scanning line 2B(j). Specifically, the correction scanning line 2E(1) will be described as an example. The correction scanning line 2E(1) is generated between the scanning line 2B(12) and the scanning line 2B(13) adjacent to each other in the vertical direction in FIG. 28.

As a result, when the build data generating unit 303 of the build data generating device 30 generates the build data, it is possible to prevent the scanning lines from being too far, which may cause the melting defect and the recess, and to reduce the variation in density of the scanning lines. Furthermore, in the sintering step, the control unit 50 controls the beam irradiation device 14 according to the build data generated in advance by the build data generating unit 303, so that the electron beam 15 is scanned along the plurality of scanning lines 2B(j) and the plurality of correction scanning lines 2E(i) to manufacture the article. Therefore, in the three-dimensional PBF-AM apparatus 10, when an article is manufactured by melting the cross-sectional shape of each layer by irradiation (scanning) of the electron beam 15, the occurrence of melting defects and recesses due to insufficient melting can be prevented. Therefore, it is possible to prevent the occurrence of irregularities in the contour portions P21, P22, P23, and P24 (see FIG. 22).

Note that the order in which the beam irradiation device 14 of the three-dimensional PBF-AM apparatus 10 scans the plurality of scanning lines 2B(j) and the plurality of correction scanning lines 2E(i) generated by the build data generating unit 303 of the build data generating device 30 with the electron beam 15 can be arbitrarily set.

For example, the plurality of scanning lines 2B(j) may be beam scanned first from the scanning line 2B(1) on the upper side in FIG. 28, or may be beam scanned first from the scanning line 2B(n) on the lower side in FIG. 28. Further, scanning lines adjacent in the vertical direction in FIG. 28 may be sequentially beam scanned, or beam scanning may be repeated while several scanning lines are skipped. The plurality of scanning lines 2B(j) may be beam scanned in a completely random order. When the plurality of scanning lines 2B(j) are scanned in any order, all the scanning lines 2B(j) need to be beam scanned.

For the plurality of correction scanning lines 2E(i), for example, every time one scanning line is beam scanned, a correction scanning line located between the scanning line and a scanning line adjacent to the scanning line may be beam scanned. As a specific example, in FIG. 28, after beam scanning is performed with the scanning line 2B(12), beam scanning is performed with the correction scanning line 2E(1), and then beam scanning is performed with the scanning line 2B(13), and beam scanning is performed with the correction scanning line 2E(2). The plurality of correction scanning lines 2E(i) may be beam scanned before the plurality of scanning lines 2B(j) are beam scanned or after the plurality of scanning lines 2B(j) are beam scanned.

Furthermore, the same manufacturing condition may be applied or different manufacturing conditions may be applied when beam scanning is performed with the plurality of scanning lines 2B(j) and when beam scanning is performed with the plurality of correction scanning lines 2E(i). When different manufacturing conditions are applied, at least one of the scanning speed, the beam size in the manufactured surface, the beam current amount, and the beam intensity may be different.

As a technique for suppressing the occurrence of irregularities in the contour portions P21, P22, P23, and P24 (see FIG. 22), there is a technique of generating a contour scanning line along a contour line of a cross-sectional shape of a manufactured object and performing beam scanning (vector scanning) along the contour scanning line. The contour scanning line is a line representing a figure similar in shape to the cross-sectional shape of the manufactured object. In the technique, the contour scanning line is generated only in the surface region of the manufactured object with respect to the region of the cross-sectional shape of the manufactured object. A plurality of scanning lines are generated by a raster scanning method in a region inside the surface region of the manufactured object. Thus, in the sintering step, beam scanning (vector scanning) along the contour scanning line and beam scanning (raster scanning) along the plurality of scanning lines are performed. Therefore, the occurrence of irregularities on the surface of the manufactured object can be prevented including the contour portions P21, P22, P23, and P24 (see FIG. 22). Furthermore, when the raster scanning method is applied to a region on the inner side of the surface region of the manufactured object, there is an advantage that a wide range can be uniformly melted at high speed when the cross-sectional shape of the manufactured object is melted by beam scanning.

However, even in a case where the contour scanning line is generated in the surface region of the manufactured object and the plurality of scanning lines is generated in the region on the inner side of the surface region of the manufactured object by the raster scanning method as described above, when the polygon 2A is regarded as a region to which the raster scanning method is applied, a melting defect due to insufficient melting or excessive melting may occur in the contour portions P21, P22, P23, and P24 (see FIG. 22). Even in such a case, the insufficient melting and the excessive melting are eliminated by the build data generating unit 303 generating the plurality of scanning lines 2B(j) and the plurality of correction scanning lines 2E(i) as illustrated in FIG. 28, so that the occurrence of the melting defect can be prevented.

<Modifications and the like >

The technical scope of the present invention is not limited to the above-described embodiment, and includes a mode in which various modifications and improvements are added within a range in which specific effects obtained by the constituent elements of the invention and the combination thereof can be derived.

For example, in a case where a plurality of scanning lines are generated by a predetermined beam scanning method, when there are both a portion where the arrangement of the scanning lines becomes sparse and a portion where the arrangement of the scanning lines becomes dense, the build data generating unit 303 may generate the correction scanning lines only in the portion where the arrangement of the scanning lines becomes sparse, or may generate the correction scanning lines only in the portion where the arrangement of the scanning lines becomes dense. However, the build data generating unit 303 preferably generates correction scanning lines in a portion where the arrangement of the scanning lines becomes sparse and a portion where the arrangement of the scanning lines becomes dense.

Reference Signs List

10 three-dimensional powder bed fusion additive manufacturing (PBF-AM) apparatus
15 electron beam (charged particle beam)
30 build data generating device
38 manufactured object (article)
303 build data generating unit
40 cross-sectional shape
41 to 47 scanning line
61 to 66 scanning line
71 to 79 correction scanning line
2A polygon (cross-sectional shape)
2B(j) scanning line
2E(i) correction scanning line
P21, P22, P23, P24 contour portion

**Claims**

1.  A build data generating device (30) generating build data for controlling a three-dimensional powder bed fusion additive manufacturing apparatus (10) that manufactures an article (38) by melting a cross-sectional shape (40, 2A) of each layer by irradiation of a beam, the build data generating device (30) comprising:
    a build data generating unit (303) that generates a plurality of scanning lines (61 to 66 or 2B(1) to 2B(n)) in a region of the cross-sectional shape (40, 2A) cut out from three-dimensional shape data of the article (38) by a predetermined beam scanning method, and generates correction scanning lines (71 to 79 or 2E(1) to 2E(m)) in a portion where arrangement of the scanning lines becomes sparse and/or a portion where arrangement of the scanning lines becomes dense.

2.  The build data generating device according to claim 1, wherein

    the plurality of scanning lines (61 to 66) are concentric scanning lines generated by an annual ringshaped vector scanning method, and the build data generating unit (303) generates the correction scanning lines (71 to 79) in a portion where the arrangement of the concentric scanning lines becomes sparse and/or a portion where the arrangement of the concentric scanning lines becomes dense.

3.  The build data generating device according to claim 2, wherein
    the build data generating unit (303) adds the correction scanning lines (71 to 74, 77) in the sparse portion and replaces the scanning lines with the correction scanning lines (75, 76, 78) in the dense portion.

4.  The build data generating device according to claim 1, wherein

    the plurality of scanning lines (2B(1) to 2B(n)) are parallel line-shaped scanning lines generated by a raster scanning method, and the build data generating unit (303) generates the correction scanning lines (2E(1) to 2E(m)) in contour portions inclined with respect to the scanning lines (2B(1) to 2B(n)) among contours of the cross-sectional shape (2A).

5.  The build data generating device according to claim 4, wherein
    the build data generating unit (303) generates the correction scanning lines (2E(1) to 2E(m)) between the scanning lines (2B(1) to 2B(n)) adjacent to each other in a direction orthogonal to the scanning lines (2B(1) to 2B(n)).

6.  A three-dimensional powder bed fusion additive manufacturing system (100) comprising:

    a three-dimensional powder bed fusion additive manufacturing apparatus (10) that manufactures an article (38) by melting a cross-sectional shape (40, 2A) of each layer by irradiation of a beam; and
    a build data generating device (30) that generates build data for controlling the three-dimensional powder bed fusion additive manufacturing apparatus (10), wherein
    the build data generating device (30) includes a build data generating unit (303) that generates a plurality of scanning lines (61 to 66 or 2B(1) to 2B(n)) in a region of the cross-sectional shape (40, 2A) cut out from three-dimensional shape data of the article (38) by a predetermined beam scanning method, and generates correction scanning lines (71 to 79 or 2E(1) to 2E(m)) in a portion where arrangement of the scanning lines becomes sparse and/or a portion where arrangement of the scanning lines becomes dense, and
    the three-dimensional powder bed fusion additive manufacturing apparatus (10) manufactures the article (38) by performing scanning with the beam along the plurality of scanning lines (61 to 66 or 2B(1) to 2B(n)) and the correction scanning lines (71 to 79 or 2E(1) to 2E(m)).

7.  A three-dimensional powder bed fusion additive manufacturing method for manufacturing an article (38) by melting a cross-sectional shape (40, 2A) of each layer by irradiation of a beam, the method comprising:

    generating a plurality of scanning lines (61 to 66 or 2B(1) to 2B(n)) in a region of the cross-sectional shape (40, 2A) cut out from three-dimensional shape data of the article (38) by a predetermined beam scanning method, and generating correction scanning lines (71 to 79 or 2E(1) to 2E(m)) in a portion where arrangement of the scanning lines becomes sparse and/or a portion where arrangement of the scanning lines becomes dense, and

manufacturing the article (38) by performing scanning with the beam along the plurality of scanning lines (61 to 66 or 2B(1) to 2B(n)) and the correction scanning lines (71 to 79 or 2E(1) to 2E(m)).

FIG. 1

<u>10</u>

50

```
┌─────────────────────────┐        ┌──────────────────────────┐
│  CONTROL UNIT           │   ────→│  BEAM IRRADIATION DEVICE │──14
│                         │        └──────────────────────────┘
│     ┌─────────────┐     │
│ 50a─│  PROCESSOR  │     │        ┌──────────────────────────┐
│     └─────────────┘     │   ────→│ POWDER APPLICATION DEVICE│──16
│                         │        └──────────────────────────┘
│     ┌─────────────┐     │
│ 50b─│ STORAGE UNIT│     │        ┌──────────────────────────┐
│     └─────────────┘     │   ────→│   PLATE MOVING DEVICE    │──26
│                         │        └──────────────────────────┘
└─────────────────────────┘
```

## *FIG. 2*

START

PLATE HEATING STEP — S1

PLATE LOWERING STEP — S2

POWDER APPLICATION STEP — S3

PREHEATING STEP (POWDER-HEAT) — S4

SINTERING STEP — S5

PLATE LOWERING STEP — S6

PREHEATING STEP (AFTER-HEAT) — S7

POWDER APPLICATION STEP — S8

PREHEATING STEP (POWDER-HEAT) — S9

SINTERING STEP — S10

IS MANUFACTURING COMPLETED? — S11

NO

YES

END

*FIG. 3*

## FIG. 4

(THREE-DIMENSIONAL SHAPE DATA)  100

30

| BUILD DATA GENERATING DEVICE (CAM SOFTWARE) |
| --- |

(BUILD DATA) →

10

| THREE-DIMENSIONAL POWDER BED FUSION ADDITIVE MANUFACTURING APPARATUS |
| --- |

## FIG. 5

30

BUILD DATA GENERATING DEVICE

301

| CAPTURING UNIT |
| --- |

302

| CUTOUT UNIT |
| --- |

| BUILD DATA GENERATING UNIT |
| --- |

303

| OUTPUT UNIT |
| --- |

304

FIG. 6

# FIG. 7

# FIG. 8

**FIG. 9**

**FIG. 10**

24

# FIG. 11

# FIG. 12

## FIG. 13

1F 1A (1D) axd+ε

axd+ε

axd+ε

(1D)

axd+ε

(1D)

(1D)

axd+ε

## FIG. 14

1A

1G(2)

1G(1)

*FIG. 15*

1A

1G(2)

1H(2,1)

1G(1)

1H(1,1)

**FIG. 16**

1G(i)

1H(i,1)

**FIG. 17**

1G(i)

1H(i,1)

**FIG. 18**

1H(i,1)

1G(i)

P

1H(i,2)

## FIG. 19

## FIG. 20

## FIG. 21

2A

## FIG. 22

2B(1)  2B(2)  2B(3)

2A

p

P20

P23

P24

P22

P21

p

2B(n)  2B(n-1)

2B(j) : 2B(1), 2B(2), ⋯ , 2B(n)

*FIG. 23*

*FIG. 24*

## FIG. 25

## FIG. 26

## FIG. 27

## FIG. 28

2E(i) : 2E(1), 2E(2), ⋯ , 2E(m)

Europäisches
Patentamt

European
Patent Office

Office européen
des brevets

# EUROPEAN SEARCH REPORT

Application Number

EP 24 19 4762

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 114 160 810 A (XINJIN LASER SCIENCE AND TECH DEVELOPMENT BEIJING LIMITED COMPANY) 11 March 2022 (2022-03-11) * paragraph [0095] * * claim 1 * * figures 1-5 * ----- | 1-3,6,7 | INV. B22F10/366 B22F10/28 B22F10/38 B33Y10/00 B33Y50/02 |
| X | US 2018/326669 A1 (CHEN BAOQUAN [CN] ET AL) 15 November 2018 (2018-11-15) * paragraphs [0021], [0029] * * claim 1 * * figure 6 * ----- | 1-3,6,7 | |
| X | JIA HAOLIN ET AL: "Scanning strategy in selective laser melting (SLM): a review", THE INTERNATIONAL JOURNAL OF ADVANCED MANUFACTURING TECHNOLOGY, vol. 113, no. 9-10, 24 February 2021 (2021-02-24), pages 2413-2435, XP037393935, ISSN: 0268-3768, DOI: 10.1007/S00170-021-06810-3 * figure 2(g) * ----- | 1,4-7 | TECHNICAL FIELDS SEARCHED (IPC) B22F B33Y |

The present search report has been drawn up for all claims

| Place of search | Date of completion of the search | Examiner |
|---|---|---|
| The Hague | 7 January 2025 | Järvi, Tommi |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 19 4762

This annex lists the patent family members relating to the patent documents cited in the above-mentioned European search report.
The members are as contained in the European Patent Office EDP file on
The European Patent Office is in no way liable for these particulars which are merely given for the purpose of information.

07-01-2025

| Patent document cited in search report | | Publication date | Patent family member(s) | | Publication date |
|---|---|---|---|---|---|
| CN 114160810 | A | 11-03-2022 | NONE | | |
| US 2018326669 | A1 | 15-11-2018 | CN | 105711102 A | 29-06-2016 |
| | | | US | 2018326669 A1 | 15-11-2018 |
| | | | WO | 2017181497 A1 | 26-10-2017 |

EPO FORM P0459

For more details about this annex : see Official Journal of the European Patent Office, No. 12/82

**EP 4 512 551 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019007065 A